# EUROPEAN PATENT APPLICATION

(11) **EP 2 108 925 A1**
(43) Date of publication of application: **14.10.2009**
(21) Application number: 08425231.1
(22) Date of filing: 08.04.2008
(51) Int. Cl.: G01D 5/34, G01D 5/36

(54) **A method and device for counting the number of revolutions of an alternator**

(71) Applicant: ANSALDO ENERGIA S.P.A., 16152 Genova (IT)
(72) Inventor: Filanti, Davide, 16162 Genova (IT)
(74) Representative: Bergadano, Mirko

(57) **Abstract**

A method for counting the number of revolutions of a rotor of an alternator includes directing a first light beam (B1) towards a portion of the rotor (8, 22) of an alternator (10) and detecting an intensity of a second light beam (B2), produced by reflection of the first light beam (B1) onto the portion of the rotor (8, 22) of the alternator (10). The number of revolutions (N) of the alternator (10) is determined according to the intensity of the second light beam (B2). The portion of the rotor (8, 22) illuminated by the first light beam (B1) hasd a surface discontinuity (24, 25) and the count of the number of revolutions (N) is based on detecting the surface discontinuity (24, 25) at each revolution of the rotor (8).

## Description

The present invention relates to a method and to a device for counting the number of revolutions of an alternator.

As known, the count of the number of the revolutions of an alternator in a plant for the production of electric energy is a very important parameter for checking functionalities, in addition to the normal regulation and control operations. For example, the number of revolutions of the rotor itself must be known to check coil short circuits and short circuits to ground of the rotor of the alternator. However, the quantities used by regulation devices are not normally available for a check in the field. For this reason, the apparatuses for checking short circuits incorporate a revolution counter which allows to acquire the current number of revolutions of the rotor thorugh a direct detection.

The use of mechanical revolution counters with sliding sensors is not normally possible for safety reasons. The number of revolutions is thus generally acquired through optical revolution counters with the aid of reflecting markers. A reflecting marker, e.g. a strip with a highly reflecting surface, is applied to the rotor in a position visible from the outside. An optical revolution counter device is provided with a light source, usually a laser source, and with an optical sensor. The light source emits a first light beam and can be oriented towards the rotor so as to periodically illuminate the marker at each revolution of the rotor. The optical sensor is arranged so as to detect a second light beam, reflected by the marker, when the marker is hit by the first light beam by effect of the rotation of rotor. A processing unit, coupled to the optical sensor, allows to recognise the passage of the reflecting marker and thus to determine the number of revolutions of the rotor. The count is easy because the reflecting power of the marker is considerably higher than that of the surface of the rotor illuminated by the light source. Therefore, the optical sensor is able to provide a high quality output signal, with a high signal/noise ratio and a well-recognisable shape, even in the presence of interferences.

However, the need to apply the reflecting marker directly to the rotor is a quite serious limitation, because the alternator is required to be stopped. The stop clearly involves considerable disadvantages both due to the system downtime cost and because very often the shut-down and restart operations are complex and difficult.

It is the object of the present invention to provide a method and a device for counting the number of revolutions of an alternator, which are free from the described limitations.

According to the present invention, a method for counting the number of revolutions of an alternator and a counter device for counting the number of revolutions of an alternator are provided, as claimed in claims 1 and 10 respectively.

The present invention will now be described with reference to the accompanying drawings, which show a non-limitative embodiment thereof, in which:
- figure 1 is a simplified block diagram of a counter device in accordance with an embodiment of the present invention;
- figure 2 is a more detailed block diagram of a first part of the counter device in figure 1;
- figure 3 shows a detail of the counter device in figure 1;
- figure 4 is a partial three-quarters top perspective view of a rotor of an alternator;
- figure 5 is a side view of a detail of the rotor in figure 4;
- figure 6 shows details of the rotor in figure 4 and of the counter device in figure 1 in a first step of a method in accordance with an embodiment of the present invention;
- figure 7 shows the details in figure 6 in a second step of the method in accordance with the present invention;
- figure 8 is a detailed block diagram of a part of the counter device in figures 1 and 2;
- figure 9 is a chart which shows magnitudes related to the method in accordance with the present invention;
- figure 10 is a side view of a detail of a rotor of an alternator, used in a method in accordance with another embodiment of the present invention; and
- figure 11 is a front view of a detail of a rotor of an alternator, used in a method in accordance with another embodiment of the present invention.

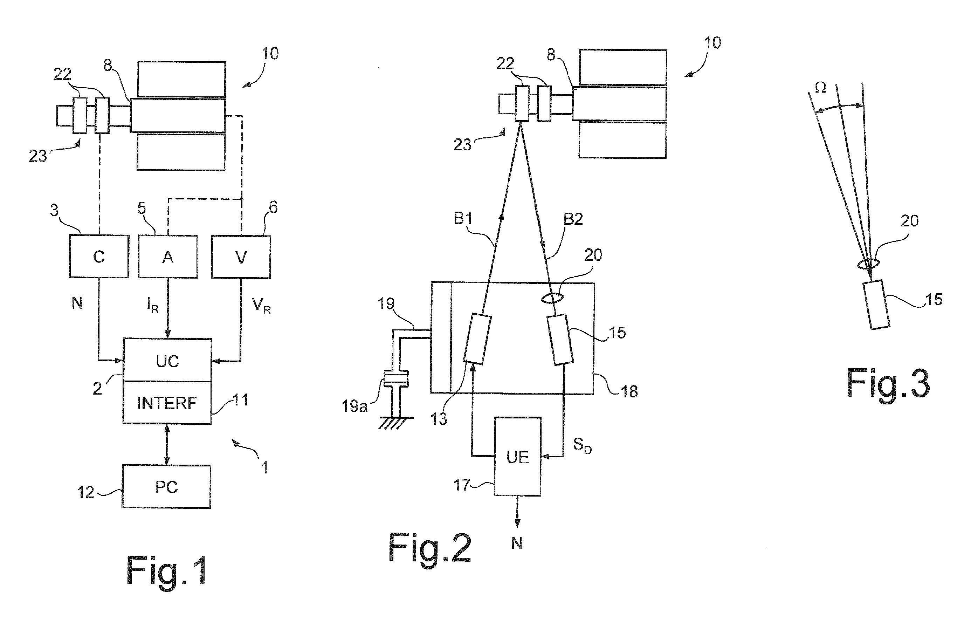

In figure 1, reference number 1 indicates as a whole an apparatus for detecting short circuits in a rotor of an alternator comprising a control unit 2, a revolution counter 3, a voltmeter 5 and an ammeter 6.

The control unit 2 coordinates the revolution counter device 3, the voltmeter 5 and the ammeter 6 for detecting coil short circuits and short circuits to ground in the rotor 8 of an alternator 10. Specifically, the revolution counter device 3 detects the number of revolutions N of the rotor 8, while the voltmeter 5 and the ammeter 6 are used to detect test energising voltages V_{R} and currents I_{R}, independent from the energising system of the alternator 10. Specifically, in this regard, an alternating voltage is applied to the rings and the absorbed current is measured for the various speeds of the rotor 8, starting from a nominal speed. supplied to the rotor 8 to generate the inductor magnetic field. The collected data are processed in a known manner by the control unit 2, which is provided with a communication interface 11 for connection to an external calculator 12.

With reference to figure 2, the revolution counter device 3 includes a light source 13, an optical sensor 15 and a processing unit 17.

The light source 13 and the optical sensor 15 are accommodated in a same casing 18, provided with an anti-vibration support 19, which is connectable to ground or to a fixed part of the alternator 10.

The light source 13 is a laser source and supplies a first light beam B1 which, in the embodiment described here, has a wave length of 650 nm. The light source 13 has a response time of 330 µs, for example.

The optical sensor 15 includes a matrix of photo detectors, not shown here, for example photo diodes, and supplies a first detection signal S_{D}, indicating the light intensity incident as a whole on the optical sensor 15. The optical sensor 15 is arranged in the casing 18, relatively to the light source 13, so as to intercept a second light beam B2 produced by the reflection of the first light beam B1 on a surface at a measuring distance (more precisely, on a surface which is essentially perpendicular to an optical axis of the optical sensor 10 and arranged at a distance within a predetermined range, so that the second beam B2 is incident on the optical sensor 10). Therefore, the first detection signal S_{D} is correlated to the intensity of the second light beam B2. Furthermore, the optical sensor 15 is provided with an optical system which, in the embodiment described here, includes a single lens 20. The lens 20 allows to reduce a viewing angle of the optical sensor 15 to a solid angle (centred about an optical axis A of the optical sensor 15 itself, as shown in figure 2). In this manner, the interference due to multiple reflections of the first light beam B1 and to the light spread in the environment is drastically reduced.

With reference again to figure 1, the anti-vibration support 19, in addition to damp the vibrations produced by the alternator 10, allows to orient the light source 13 so as to direct the first light beam B1 emitted by the light source 13 when this is activated towards a portion in sight of the rotor 8. Specifically, the anti-vibration support 19 includes a damper 19a made of an elastomeric material, having a stop band which extends, for example, between 10 Hz and 200 Hz.

The processing unit 17 is coupled to the optical sensor 15 to receive the first detection signal S_{D}. As explained below, the processing unit 17 processes the first detection signal S_{D} and determines the number of revolutions N of the rotor 8 of the alternator 10.

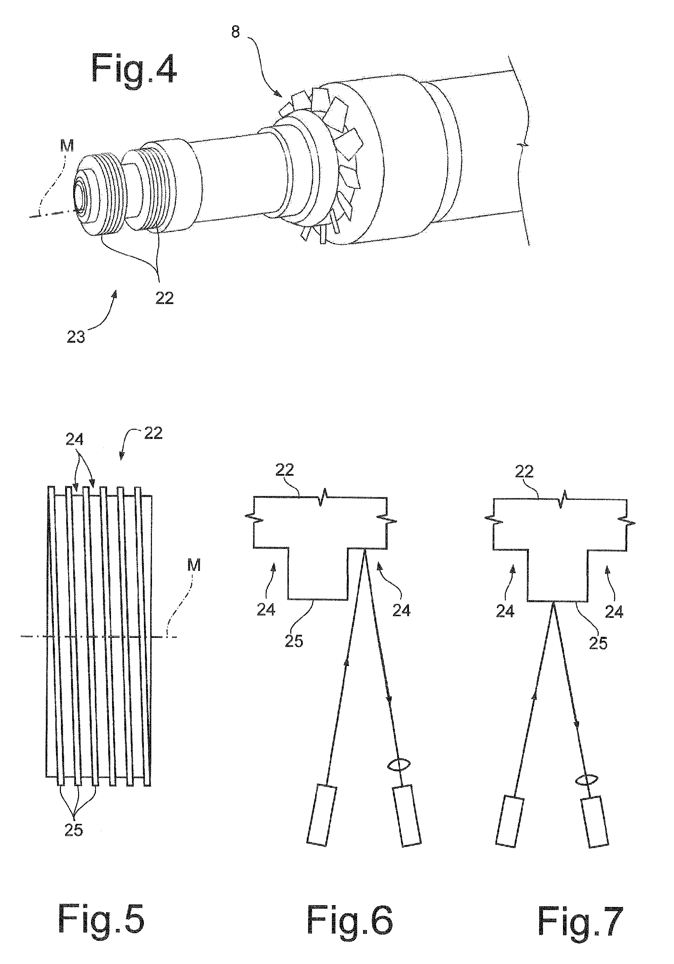

In use, the light source 15 is oriented so as to direct the first light beam B1 towards a portion in sight of the rotor 8 of the alternator 10. Specifically, the first beam B1 is directed onto a portion of a ring 22 of a collector 23 of the rotor 8 (also see figures 4 and 5). As known, the rings 22 of the collector 23 are slidably coupled to the brushes of a static exciter (not shown here) to supply an energising voltage to windings (also not shown) of the rotor 8 and to generate an inductor magnetic field.

As shown in figures 4-6, the external surface of the rings 22, which are coaxial to the rotor 8, has a helical groove 24, which defines a helical ridge 25 about a machine axis M of the alternator 10. The portion of the rotor 8 illuminated by the first light beam B1 thus has a surface discontinuity which, during the rotation of the rotor 8, causes periodical variations of the intensity of the second light beam B2. Such a surface discontinuity is detected to determine the number of revolutions N ozf the rotor 8.

More specifically, the light source 15 is oriented perpendicularly to the machine axis M and is fixed. The optical sensor 15 is arranged along the path of the second light beam B2. According to the angular position of the rotor 8 during rotation, the first light beam B1 is directed either onto the bottom of the groove 24 (figure 6) or onto one of the turns of the helical ridge 25, which has a much higher reflecting power than the helical groove 24 (figure 7). Also the intensity of the second light beam B2 reflected by the rotor 8 and, accordingly, the first detection signal S_{D} periodically vary during the rotation of the rotor 8.

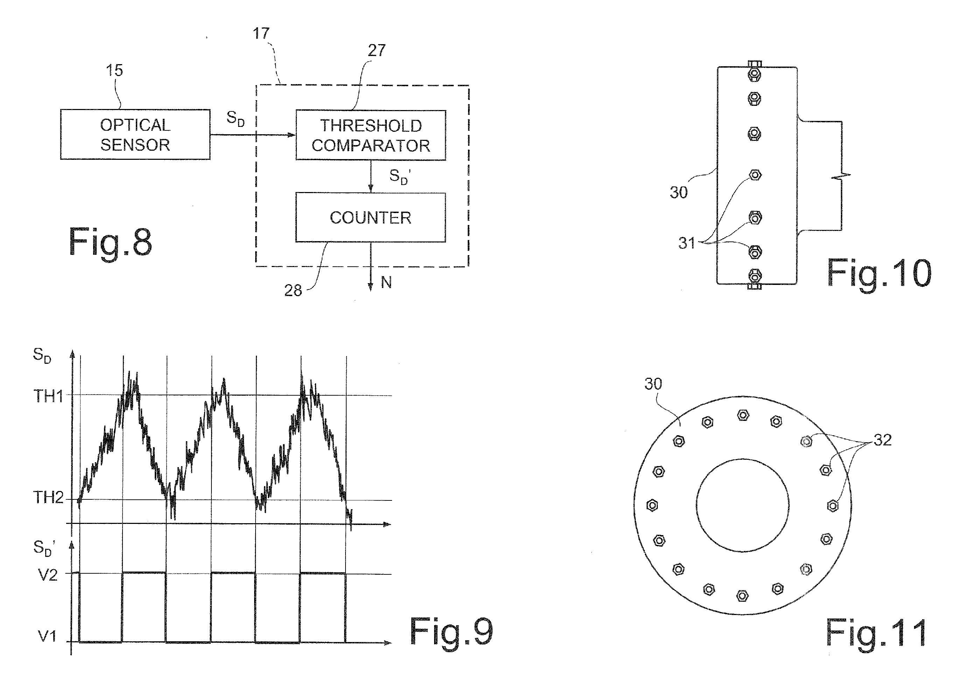

The first detection signal S_{D} is processed by the processing unit 17 to determine the number of revolutions of the rotor 8. For this purpose (figure 8), the processing unit 17 includes a threshold comparator 27 with hysteresis, e.g. a Schmitt trigger, and a counter module 28. The threshold comparator 27 is coupled to the optical sensor 15 to receive the first detection signal S_{D}, which is converted into a square second wave detection signal S_{D}' (figure 9). More precisely, the first electric signal S_{D} is compared with a first threshold TH1 and a second threshold TH2, lower than the first threshold TH1. As shown in figure 8, when the first electric signal S_{D} from lower becomes higher than the first threshold TH1, the second electric signal S_{D}' switches from a first value V1 (e.g. 0 V) to a second value V2 (e.g. 5 V). On the other hand, when the first electric signal S_{D} from higher becomes lower than the second threshold TH2, the second electric signal S_{D}' switches from the second value V2 to the first value V1.

The counter module 28 is coupled to the threshold comparator 27 and is configured to be increased in response to edges of the second detection signal S_{D}'.

Therefore, in practice, the first light beam B1 is oriented towards a portion of the rotor 8 which has a surface discontinuity. The rotation of the rotor 8 causes periodical variations of the second light beam B2 and of the first detection signal S_{D}. By means of the threshold comparator 27, the first detection signal S_{D} is converted into the second square wave detection signal S_{D}', which displays clear and easily detectable edges. The edges (leading edges in the described example) of the second detection signal S_{D}' are detected by the counter module 28, which outputs the number of revolutions N of the rotor 8.

In a different embodiment of the method according to the invention (figure 10), the first light beam B1 is directed towards radial fastening bolts 31 of a flange 30 covering the rotor hole, on the side of the collector.

In a further embodiment of the method according to the invention (figure 11), the first light beam B1 is directed towards axial fastening bolts 32 of the flange 30 covering the rotor hole.

As described above, it is apparent that the invention advantageously allows to measure in the field the number of revolutions of an alternator in a precise and reliable manner, without the need to stop the alternator. The choice of using portions of the rotor which display surface discontinuities and great differences of reflecting power allows to avoid the use of reflecting markers, otherwise indispensable. The markers enhance the difference of reflecting power, but cannot be applied without stopping the alternator. The invention can thus drastically reduce the cost and the complexity of the experimental tests needed to verify the functionality of the alternator.

Processing the first detection signal allows to eliminate environmental interferences and to facilitate the recognition of surface discontinuities, making the count of the number of revolutions of the rotor more reliable.

It is finally apparent that changes and variations can be made to the described method and device without departing from the scope of the present invention as defined in the appended claims.

## Claims

1. A method for counting the revolutions of a rotor of an alternator, including:
directing a first light beam (B1) towards a portion of a rotor (8, 22) of an alternator (10);
detecting the intensity of a second light beam (B2), produced by reflection of the first light beam (B1) onto the portion of rotor (8, 22) of the alternator (10);
determining a number of revolutions (N) of the alternator (10) on the basis of the intensity of the second light beam (B2);
**characterised in that** the portion of the rotor (8, 22) illuminated by the first light beam (B1) has a surface discontinuity (24, 25), and **in that** determining the number of revolutions (N) includes detecting the surface discontinuity (24, 25) at each revolution of the rotor (8).

2. A method according to claim 1, wherein the portion of the rotor (8, 22) includes a portion of a collector ring (22, 23), coaxial to the rotor (8) and having a helical groove (24) and a helical ridge (25) on an external surface.

3. A method according to claim 1, wherein the portion of the rotor (8, 22) includes radial fastening bolts (31) of a flange (30) covering the rotor hole, on a collector side.

4. A method according to claim 1, wherein the portion of the rotor (8, 22) includes fastening bolts (32) of a flange (30) covering the rotor hole, on a collector side.

5. A method according to any one of the preceding claims, wherein detecting the intensity of the second light beam (B2) includes generating a first signal (S_{D}) indicating the intensity of the second light beam (B2), and determining the number of revolutions (N) includes converting the first signal (S_{D}) into a square second wave signal (S_{D}') and detecting edges of the second signal (S_{D}').

6. A method according to claim 5, wherein converting the first signal (S_{D}) includes:
comparing the first signal (S_{D}) with a first threshold (TH1);
switching the second signal (S_{D}') from a first value (V1) to a second value (V2), when the first signal (S_{D}) becomes higher than the first threshold (TH1);
comparing the first signal (S_{D}) with a second threshold (TH2), lower than the first threshold (TH1); and
switching the second signal (S_{D}') from the second value (V2) to the first value (V1) when the first signal (S_{D}) becomes lower than the second threshold (TH2).

7. A method according to claim 6, wherein converting the first signal (S_{D}) includes supplying the first signal (S_{D}) to a threshold comparator with hysteresis (27).

8. A method according to any one of the preceding claims, including activating a light source (13) to generate the first light beam (B1) and damping vibrations transmitted to the light source (13).

9. A method according to any one of the proceeding claims, wherein detecting the intensity of the second light beam (B2) includes arranging a second optical sensor (15) along a direction of the second light beam (B2) and reducing a viewing angle (Ω) of the optical sensor (15) to a solid angle centred about an optical axis (A) of the optical sensor (15).

10. A device for counting the number of resolutions of an alternator, including:
a light source (13), for supplying a first light beam (B1) orientable towards a portion of the rotor (8, 22) of an alternator (10);
an optical sensor (15), for supplying a first signal (S_{D}) indicative of an intensity of a second light beam (B2), produced by reflection of the first light beam (B1) onto a surface at a measuring distance;
a processing unit (17), for determining a number of revolutions (N) of the alternator (10) according to the first signal (S_{D});
**characterized in that** said processing unit (17) includes:
a threshold comparator with hysteresis (27), for converting the first signal (S_{D}) into a square second wave signal (S_{D}'), switching from a first value (V1) to a second value (V2), when the first value (S_{D}) becomes higher than a first threshold (TH1), and from the second value (V2) to the first value (V1), when the first signal (S_{D}) becomes lower than a second threshold (TH2), lower than the first threshold (TH1); and
a counter module (28), configured to be increased in response to edges of the second signal (S_{D}').

11. A device according to claim 10, wherein the optical sensor (15) is provided with an anti-vibration support (19).

12. A device according to claim 10 or 11, wherein the optical sensor (15) is provided with optical lens means (20) to reduce a viewing angle (Ω) of the optical sensor (15) to a solid angle centred about an optical axis (A) of the sensor.
